# FASCICULE DE BREVET EUROPEEN

(11) **EP 3 177 455 B1**
(45) Date de publication et mention de la délivrance du brevet: **11.07.2018**
(21) Numéro de dépôt: 15759884.8
(22) Date de dépôt: 04.08.2015
(51) Int. Cl.: B29D 11/00, G02B 1/10

(54) **PROCÉDÉ POUR DIMINUER OU ÉVITER LA DÉGRADATION D'UNE COUCHE ANTISALISSURE D'UN ARTICLE D'OPTIQUE**
VERFAHREN ZUR VERMINDERUNG ODER VERMEIDUNG DES ABBAUS EINER FÄULNISVERHINDERNDEN SCHICHT EINES OPTISCHEN ARTIKELS
METHOD FOR REDUCING OR PREVENTING THE DEGRADATION OF AN ANTIFOULING LAYER OF AN OPTICAL ARTICLE

(30) Priorité: 05.08.2014 FR 1457608
(43) Date de publication de la demande: 14.06.2017
(73) Titulaire: Essilor International, 94220 Charenton-le-Pont (FR)
(72) Inventeur: HERVIEU, Grégory, Bangkok 10520 (TH); VALENTI, Christophe, F-94227 Charenton Le Pont cedex (FR); CALBA, Pierre-Jean, F-94227 Charenton Le Pont cedex (FR); MAITRE, Nicolas, F-94227 Charenton Le Pont cedex (FR)
(74) Mandataire: Jacobacci Coralis Harle
(86) Numéro de dépôt international: PCT/FR2015/052153
(87) Numéro de publication internationale: WO 2016/020619

(56) Documents cités:
- EP-B1- 1 392 613
- EP-B1- 1 633 684

## Description

La présente invention concerne de manière générale un procédé pour diminuer ou éviter la dégradation d'une couche antisalissure d'un article d'optique, notamment d'une lentille ophtalmique, due au dépôt sur cette couche antisalissure d'une surcouche d'aide au débordage.

Comme cela est bien connu dans la technique, une lentille ophtalmique résulte d'une succession d'étapes de moulage, surfaçage et doucissage déterminant la géométrie des surfaces optiques convexes et concaves de la lentille, suivies de traitements de surface appropriés.

La dernière étape de finition d'une lentille ophtalmique est une opération de débordage qui consiste à usiner la périphérie ou bord de la lentille pour la conformer aux dimensions et à la forme requise pour son adaptation à une monture donnée.

Comme cela est également bien connu, cette opération de débordage est effectuée au moyen d'une machine de meulage comprenant des roues diamantées.

Lors de l'opération de débordage, la lentille est maintenue par des éléments de blocage axiaux, la lentille étant fixée dans un des éléments de blocage par adhésion, notamment au moyen d'un patin adhésif. Le bon maintien de la lentille lors de cette opération de débordage dépend donc essentiellement de la bonne adhésion de la surface de la lentille avec l'élément de blocage.

Comme cela est, par ailleurs, également bien connu, en général la dernière couche fonctionnelle formée sur la surface convexe de la lentille, surface destinée à être fixée par adhésion, au moyen d'un patin, à l'élément de blocage lors d'une opération de débordage, est une couche antisalissure de faible énergie de surface.

Ces couches antisalissures, typiquement formées de matériaux à base de fluoro-silanes, ont atteint un tel degré de performance, notamment des valeurs d'énergie de surface si faibles, qu'il n'était plus possible de fixer par adhésion les lentilles revêtues de telles couches antisalissures au patin adhésif de l'élément de blocage en vue de leur débordage.

Pour remédier à cette difficulté, on a proposé de revêtir la couche antisalissure de la lentille avec une surcouche temporaire rehaussant l'énergie de surface de la surface de la lentille et permettant ainsi la fixation au moyen d'un patin adhésif à l'élément de blocage pour un débordage sans risque de la lentille. Cette surcouche temporaire d'aide au débordage, typiquement une couche de fluorure et/ou oxyde métallique, est aisément enlevée, notamment par simple essuyage, une fois le débordage effectué, tout en conservant une couche antisalissure performante.

Une telle solution est décrite entre autres dans les brevets EP1392613 et EP1633684.

Bien que les solutions ci-dessus aient donné satisfaction, les inventeurs ont déterminé que, lorsque la surcouche temporaire d'aide au débordage était déposée rapidement après le dépôt de la couche antisalissure, c'est-à-dire dans un délai de 15 jours après le dépôt de cette couche antisalissure, il apparaissait une dégradation non négligeable des propriétés de la couche antisalissure après enlèvement de la surcouche d'aide au débordage. Notamment, l'angle de reculée d'un liquide tel que l'eau sur la couche antisalissure, tel que mesuré selon la méthode décrite ci-après sur des lentilles tests, ayant ou non été soumises à un essai de durabilité, est significativement réduit par rapport à une couche antisalissure formée dans des conditions identiques mais sur laquelle aucune surcouche d'aide au débordage n'a été déposée.

Des essais ont montré que la dégradation de la couche antisalissure est d'autant plus importante que la surcouche d'aide au débordage est déposée rapidement après le dépôt de la couche antisalissure sans remise à l'air. Les inventeurs ont également constaté que la dégradation de la couche antisalissure augmentait avec la durée de présence de la surcouche d'aide au débordage sur la couche antisalissure avant son enlèvement.

Hors, pour faciliter la fabrication industrielle, notamment de lentilles ophtalmiques, et réduire les coûts de cette fabrication, il serait souhaitable de disposer d'un procédé permettant un dépôt de la surcouche d'aide au débordage le plus rapidement possible après la formation de la couche antisalissure. De même, il serait souhaitable, une fois la surcouche d'aide au débordage déposée, de pouvoir stocker les lentilles pendant une durée prolongée, sans dégradation de la couche antisalissure, avant enlèvement de la surcouche, pour une adaptation optimale à la demande.

Les buts ci-dessous sont atteints selon la présente invention au moyen d'un procédé de fabrication d'un article d'optique apte au débordage comprenant une couche antisalissure sur laquelle est déposée une surcouche temporaire d'aide au débordage, comprenant :
- le dépôt sur un substrat optique d'une couche antisalissure organique comprenant au moins un composé polymérique fluoré comportant des fonctions hydrolysables ; et
- le dépôt sur la couche antisalissure d'une surcouche d'aide au débordage, de nature minérale, comprenant un ou plusieurs fluorures métalliques et/ou un ou plusieurs oxydes ou hydroxydes métalliques ;
procédé caractérisé en ce qu'il comprend en outre, afin de réduire ou éviter la dégradation de la couche antisalissure du fait de la présence temporaire de la surcouche d'aide au débordage, préalablement au dépôt de la surcouche d'aide au débordage, une étape de greffage accéléré de la couche antisalissure choisie parmi :
(a) un traitement de la couche antisalissure déposée dans une atmosphère humide, de préférence en atmosphère d'air à pression atmosphérique. ayant un taux d'humidité relative (RH) de 45% à 95% et une température de 15°C à 75°C, de préférence pendant une durée de 1 à 15 jours ; ou
(b) un traitement catalytique en phase vapeur acide ou basique de la couche antisalissure déposée.

La suite de la description se réfère aux figures annexées qui représentent, respectivement :
Figure 1, des graphes de l'évolution de l'angle de reculée de la couche antisalissure après dépôt et enlèvement d'une surcouche temporaire d'aide au débordage déposée selon l'art antérieur avant et suite à un essai de durabilité ;
Figure 2, des graphes de l'évolution de l'angle de reculée de la couche antisalissure après dépôt et enlèvement d'une surcouche temporaire d'aide au débordage déposée selon une réalisation du procédé de l'invention et le procédé de l'art antérieur, avant et suite à un essai de durabilité ;
Figure 3, des graphes de l'évolution de l'angle de reculée de la couche antisalissure après dépôt et enlèvement de la surcouche temporaire d'aide au débordage déposée selon une réalisation du procédé de l'invention et le procédé de l'art antérieur, avant et suite à un essai de durabilité, pour différentes durées de stockage après dépôt de la couche antisalissure avant dépôt de la surcouche et différentes durées avant enlèvement de la surcouche ;
Figure 4, des graphes de l'évolution de l'angle de reculée avant et après un test de durabilité avec le procédé de l'invention et le procédé de l'art antérieur ; et
Figure 5, un schéma de l'hystérèse d'une goutte lors de la mesure de l'angle de reculée.

L'article d'optique selon l'invention, de préférence une lentille ophtalmique, comprend un substrat en verre, de préférence en verre organique, par exemple en matière plastique thermoplastique ou thermodurcissable. Le substrat peut être choisi parmi les substrats cités dans la demande WO-2008/062142, par exemple un substrat obtenu par (co)polymérisation du bis alkyl carbonate de diéthylèneglycol, un substrat en poly(thio)méthane ou un substrat en polycarbonate (PC).

Comme cela est bien connu, le substrat peut, avant le dépôt de la couche antisalissure, être revêtu d'un ou plusieurs revêtements fonctionnels tels qu'un revêtement primaire antichoc, un revêtement antirayure et/ou antiabrasion et un revêtement antireflet.

D'autres couches fonctionnelles, telles qu'un revêtement antistatique, un revêtement polarisant ou un revêtement photochromique peuvent être présentes avant le dépôt de la couche antisalissure.

Les matériaux utilisés pour former les couche antisalissures de la présente invention sont bien connus dans la technique et sont définis comme des revêtements hydrophobes et/ou oléophobes dont l'angle de contact statique avec de l'eau désionisée est supérieur ou égal à 75°, de préférence supérieur ou égal à 90°, et mieux supérieur ou égal à 100°. L'angle de contact statique peut être déterminé selon la méthode de la goutte de liquide, selon laquelle une goutte de liquide ayant un diamètre inférieur à 2 mm est déposée doucement sur une surface solide non absorbante et l'angle à l'interface entre le liquide et la surface solide est mesuré.

La couche antisalissure selon l'invention est un revêtement organique, comprenant au moins un composé polymérique fluoré comportant des fonctions hydrolysables capables de réagir chimiquement avec le substrat afin de se greffer à celui-ci. De préférence, le composé polymérique fluoré est un composé polymérique de nature silane et/ou silazane pouvant participer à des réactions d'hydrolyse et de condensation et porteur d'un ou plusieurs groupes fluorés, en particulier des groupes hydrocarbonés fluorés, voire perfluorés. Ces composés polymériques sont aussi nommés fluorosilanes et fluorosilazanes. De préférence, les fonctions hydrolysables sont des fonctions alcoxysilanes (-Si(OR)ₙ dans laquelle n est un entier de 1 à 3 et -R est un groupe alkyl en C₁-C₄, de préférence un groupe -CH₃ ou -C₂H₅). De préférence encore, les fonctions hydrolysables sont présentes à une seule extrémité de la chaîne du composé polymérique.

Il peut être obtenu par dépôt d'un fluorosilane ou fluorosilazane précurseur, comprenant de préférence au moins deux groupes hydrolysables par molécule. Les fluorosilanes précurseurs contiennent préférentiellement des groupements fluoropolyéthers et mieux des groupements perfluoropolyéthers. Ces fluorosilanes sont bien connus et sont décrits, entre autres, dans les brevets US-5,081,192, US-5,763,061, US-6,183,872, US-5,739,639, US-5,922,787, US-6,337,235, US-6,277,485 et EP-0.933.377. De tels composés sont capables de subir, lorsqu'ils sont déposés sur une surface, des réactions de greffage avec le substrat, directement ou après hydrolyse.

De préférence, le revêtement externe antisalissure a une énergie de surface égale ou inférieure à 14 mJ/m², de préférence égale ou inférieure à 13 mJ/m², mieux égale ou inférieure à 12 mJ/m². L'énergie de surface est calculée selon la méthode Owens-Wendt décrite dans la référence : « Estimation of the surface force energy of polymers » Owens D. K., Wendt R. G. (1969), J. Appl. Polym. Sci., 13, 1741-1747.

Des composés utilisables pour obtenir de tels revêtements antisalissures sont décrits dans les brevets JP 2005187936 et US 6183872.

Des composés polymériques fluorés particulièrement préférés sont ceux correspondant à la formule (C) ci-dessous :

(C) : F-(CF₂)_{q}-(OC₃F₆)ₘ-(OC₂F₄)ₙ-(OCF₂)ₒ-(CH₂)ₚ-X(CH₂)ᵣ-(CH₂)ₜ-Si(X')₃₋ₐ (R1)ₐ

dans laquelle q est un entier de 1 à 3 ; m, n et o sont indépendamment des entiers de 0 à 200 ; p est 1 ou 2 ; X est O ou un groupe organique bivalent ; r est un entier de 2 à 20 ; t est un entier de 1 à 10, R1 est un groupe hydrocarboné linéaire ou ramifié en C₁-C₂₂ ; a est un entier de 0 à 2 ; et X' est un groupe hydrolysable, un groupe -OH ou un groupe -NH₂.

Typiquement, les groupes hydrolysables sont le chlore, les groupes alcoxy -OR et alkylamino - NHR ou -NR₂ dans lesquels R est un radical alkyl en C₁-C₂₂. Les matériaux préférés sont les matériaux comprenant un composant répondant à la formule (C) ci-dessus pour laquelle X' est un alkylamino.

De tels produits sont décrits dans la demande de brevet internationale WO-2011/060047.

Des compositions commerciales permettant de préparer des revêtements antisalissures sont les compositions KY130® (répondant à la formule du brevet JP-2005-187936) et KP 801M® commercialisées par Shin-Etsu Chemical, et la composition OPTOOL DSX® (un composé fluoré comprenant des groupes perfluoropropylène répondant à la formule du brevet US-6,183,872) commercialisée par Daikin Industries. La composition OPTOOL DSX® est une composition de revêtement antisalissure préférée.

Un produit particulièrement préféré est le produit (YY) décrit à l'exemple 4 de WO-2011/060047, et désigné ci-après par HDTC.

Typiquement, la couche antisalissure a une épaisseur physique de 1 nm à 30 nm, de préférence de 1 nm à 25 nm, mieux de 1 à 20 nm, encore mieux de 1 à 10 nm et idéalement de 1 à 5 nm. En général, l'épaisseur de la couche antisalissure est de 3 à 20 nm, de préférence 3 à 8 nm.

Les procédés de dépôt de ces couches antisalissures sont également bien connus et sont décrits, entre autres, dans les documents précités.

De même, les surcouches d'aide au débordage de nature minérale ainsi que leurs procédés sont bien connus dans la technique et sont décrits notamment dans les brevets EP-1.392.613 et EP-1.633.684.

Comme indiqué, les surcouches d'aide au débordage sont de nature minérale et plus particulièrement constituées d'un ou plusieurs fluorures métalliques tels que le fluorure de magnésium (MgF₂), le fluorure de lanthane (LaF₃), le fluorure d'aluminium (AlF₃) et le fluorure de cérium (CeF₃), d'un ou plusieurs oxydes et/ou hydroxydes métalliques tels que l'oxyde de magnésium (MgO), l'hydroxyde de magnésium (Mg(OH)₂), les oxydes de titane, d'aluminium, de zirconium et- de praséodyme ainsi que des mélanges de ces fluorures et de ces oxydes.

De préférence, la surcouche temporaire d'aide au débordage est constituée d'une couche de fluorure métallique, notamment de MgF₂, et éventuellement d'une couche d'oxyde ou d'hydroxyde, notamment de MgO ou Mg(OH)₂, comme décrit dans le brevet EP-1.633.684.

Industriellement, il est souhaitable de pouvoir effectuer successivement les opérations de dépôt du revêtement antisalissure et de la surcouche d'aide au débordage sur l'article d'optique, notamment une lentille ophtalmique, dans un temps le plus court possible et de pouvoir stocker les articles obtenus pendant une période relativement longue avant leur débordage à une forme donnée, notamment d'une monture de lunette dans le cas de lentilles ophtalmiques, pour une utilisation finale après suppression de la surcouche temporaire d'aide au débordage.

Or, les inventeurs ont mis en évidence qu'un dépôt de la surcouche temporaire immédiatement ou peu après le dépôt de la couche antisalissure ainsi qu'un stockage prolongé de l'article obtenu après les dépôts avant l'enlèvement de la surcouche temporaire entraînaient une dégradation des propriétés de la couche antisalissure, notamment une diminution de l'angle de reculée.

Comme indiqué précédemment, les défauts ci-dessus peuvent être surmontés selon l'invention en soumettant la couche antisalissure à la suite de son dépôt et avant le dépôt de la surcouche d'aide au débordage, à une étape de greffage accéléré consistant soit en un traitement dans une atmosphère humide d'air, soit en un traitement catalytique en phase acide ou basique.

Le traitement en atmosphère d'air consiste à placer l'article pourvu de la couche antisalissure dans de l'air à pression atmosphérique ayant un taux d'humidité relative (RH) de 45% à 95% et à une température de 15°C à 75°C, de préférence pendant une durée de 1 à 15 jours.

On désigne par conditions ambiantes une atmosphère d'air à pression atmosphérique ayant un RH de 45% à moins de 65%, de préférence de 50% à moins de 65% et une température de 18°C à moins de 35°C, de préférencede 20°C à moins de 35°C.

On désigne par conditions tropicales une atmosphère d'air à pression atmosphérique ayant un RH de 65% à 95% et une température de 35°Cà 75°C.

On utilise de préférence une atmosphère d'air ayant un RH de 50% à 95%, mieux de 50% à 90% et une température de 25° C à 75°C, mieux de 25°C à 50°C.

De préférence encore, le taux d'humidité relative est de 70% à 90% et la température est de 35°C à 50°C.

De préférence, la durée du traitement est de 1 à 7 jours, mieux de 2 à 5 jours.

Ce traitement en atmosphère d'air peut s'effectuer directement dans l'enceinte ayant servi pour le dépôt de la couche antisalissure, à la suite de ce dépôt. Ainsi, les dépôts de la couche antisalissure et de la surcouche d'aide au débordage sont effectués sous vide et l' étape de greffage accéléré de la couche antisalissure est un traitement dans une atmosphère humide de la couche antisalissure réalisé par une étape de remise en atmosphère d'air à pression atmosphérique entre le dépôt de la couche antisalissure et le dépôt de la surcouche d'aide au débordage.

Dans un mode de réalisation particulier, les dépôts de la couche antisalissure et de la surcouche d'aide au débordage sont effectués sous vide dans une enceinte à vide et l'étape de greffage accéléré de la couche antisalissure est un traitement dans une atmosphère humide de la couche antisalissure, réalisé par libération d'eau dans l'enceinte à vide, sans étape de remise à pression atmosphérique entre le dépôt de la couche antisalissure et le dépôt de la surcouche d'aide au débordage.

De façon préférentielle, l'eau est libérée dans l'enceinte à vide par dégivrage d'un « meissner », cette étape étant maintenant décrite plus en détail.

Le meissner est un piège cryogénique situé à l'intérieur de l'enceinte sous vide. Typiquement, il est constitué d'un long tube en cuivre en forme de serpentin dans lequel circule un fluide cryogénique. Au début d'une étape de pompage secondaire, le meissner est activé (Etape de « givrage » du meissner) : le fluide le parcourant est alors mis à une température inférieure à -100°C. Les molécules d'eau sont alorspiégées sous forme de glace sur la paroi du tube, ce qui conduit à une baisse de la pression résiduelle à l'intérieur de l'enceinte.

Lorsque le meissner est dégivré (Etape de « dégivrage » du meissner) : le fluide le parcourant est mis à une température avoisinant 25°C. Les molécules d'eau sont ainsi vaporisées et libérées dans l'enceinte, permettant d'assurer l'étape de greffage accéléré de la couche antisalissure de la présente invention..

Dans un autre mode de réalisation, l'étape de greffage est accélérée en imposant supplémentairement une augmentation de température.

Dans ce cas, la température à laquelle le procédé de l'invention est mis en oeuvre est de préférence supérieure à 60°C, mieux supérieure à70°C , encore mieux supérieure à 80°C,.

Le traitement catalytique consiste à placer l'article pourvu de la couche antisalissure dans une atmosphère acide ou basique, par exemple une phase vapeur contenant de l'acide chlorhydrique (HCl) ou de l'ammoniac (NH₃). On peut utiliser un air saturé en HCI ou NH₃ avec sa phase liquide en solution aqueuse à pression atmosphérique et température ambiante (18-35°C), de préférence 18-25°C, en particulier une solution aqueuse de HCl saturée à 37% en poids.

Les propriétés optimales de la couche antisalissure, en l'absence d'une surcouche, sont obtenues après greffage complet de la couche. On peut considérer que l'on a obtenu un greffage complet lorsque la couche en surface est homogène, cela se traduisant par un angle de reculée restant maximum même après rinçage de la surface avec un solvant fluoré ayant pour but d'éliminer les molécules non greffées.

Le temps jusqu'au greffage complet dépend de la nature de la couche antisalissure mais est généralement d'environ une semaine ou plus. Cependant, même en déposant, sans mise en oeuvre d'un traitement de greffage accéléré, la surcouche d'aide au débordage sur la couche antisalissure après ce délai de greffage, on constate une dégradation des propriétés de la couche antisalissure.

De façon surprenante, le traitement de greffage accéléré selon l'invention permet de pratiquement conserver les propriétés de la couche antisalissure, notamment la valeur de l'angle de reculée.

L'invention est illustrée, de façon non limitative, par les exemples suivants :

### Exemples

### 1. Procédures générales

### 1.1. Substrats

Les substrats utilisés sont des substrats de lentille ORMA® ESSILOR de 65 nm de diamètre, de puissance -2,00 dioptries et d'épaisseur au centre de 1,2 mm.

La face concave des substrats est revêtue i) d'un revêtement de primaire antichoc à base d'un latex polyuréthane contenant des motifs polyester, durci à 90°C pendant 1 heure (Witcobond® 234 de BAXENDEN CHEMICALS, dépôt centrifuge à 1500 tours/minute pendant 10 à 15 secondes) ; ii) du revêtement anti- abrasion et anti-rayures (hard coat) divulgué dans l'exemple 3 du brevet EP-0.614.957 (d'indice de réfraction égal à 1,50), à base d'un hydrolysat d'époxy trialcoxysilane (γ-glycidoxypropyltriméthoxysilane, GLYMO) et de dialkyl dialcoxysilane (diméthyldiéthoxysilane, DMDES), de silice colloïdale et d'acétylacétonate d'aluminium ; et iii) d'un revêtement antireflet.

Ledit revêtement anti-abrasion et anti-rayures a été obtenu par dépôt et durcissement d'une composition comprenant en masse, 224 parties de GLYMO, 80,5 parties de HCI 0,1 N, 120 parties de DMDES, 718 parties de silice colloïdale à 30% massique dans le méthanol, 15 parties d'acétylacétonate d'aluminium (catalyseur de durcissement) et 44 parties d'éthylcellosolve. La composition comporte également 0,1% de tensioactif FLUORAD™ FC-430® de 3M en masse par rapport à la masse totale de la composition.

Les couches du revêtement antireflet ont été déposées sans chauffage des substrats par évaporation sous vide, éventuellement, lorsque précisé, assistée par faisceau d'ions oxygène pendant le dépôt (source d'évaporation : canon à électrons).

Le revêtement antireflet est un empilement :

| | Matériau | Epaisseur optique (nm) |
|---|---|---|
| Première couche | ZrO₂ | 55 |
| Deuxième couche | SiO₂ | 30 |
| Troisième couche | ZrO₂ | 160 |
| Quatrième couche | SiO₂ | 120 |

Les épaisseurs optiques sont données pour λ = 550 nm.

### 1.2. Couche antisalissure

Le matériau utilisé est soit le HDTC, soit l'OPTOOL DSX® de la société DAIKIN.

Le dépôt des couches antisalissures se fait directement sur le revêtement antireflet par dépôt sous vide au moyen d'une machine de traitement sous vide (TSV) de modèle SYRUS, avec des épaisseurs programmées de 17 nm ou 19 nm, sauf la cinquième série de verres (Machine de traitement sous vide SATIS 1200 DLF).

### Mesure des épaisseurs des couches déposées

Il existe une différence entre les valeurs des épaisseurs programmées sur le dispositif d'évaporation et celles effectivement déposées. On détermine donc les conditions d'évaporation qu'il convient d'appliquer pour le dépôt des épaisseurs physiques requises pour des monocouches hydrophobes, des monocouches de fluorures métalliques et des monocouches d'oxyde ou d'hydroxyde métalliques ou de métalloïde.

Les épaisseurs sont mesurées grâce à un ellipsomètre.

### Technique utilisant un spectro-ellipsomètre Woollam VB-400 VASE

La technique est décrite pour une couche hydrophobe, mais s'applique à tout type de couche de fine épaisseur, préférentiellement inférieure ou égale à 25-30 nm et mieux (<≈10-15 nm). On dépose la monocouche hydrophobe sur un substrat de silicium monocristallin, sur lequel on a effectué un pré-traitement de bombardement ionique IPC (Ion Pre-Clearing) (60 secondes 1A-100V).

On mesure les épaisseurs déposées sur les disques de silicium.

L'indice des couches hydrophobe est de l'ordre de 1,36.

On considère que les couches se déposent sur un oxyde natif SiO₂ de 2 nm et on utilise un modèle de Cauchy pour l'indice de réfraction de la couche n=a+b/λ+c/λ² pour une longueur d'onde λ. Typiquement a=1,36 ; b=0,003 et c=0 pour les couches fluorées hydrophobes. La méthode consiste ensuite à mesurer ψ et Δ à 75° d'incidence entre 300 et 800 nm et à effectuer un ajustement informatique des valeurs (angle d'incidence et épaisseur de la couche) pour obtenir une bonne cohérence (les courbes se superposent au mieux) entre la simulation théorique et la mesure réelle de l'échantillon en utilisant Tan (ψ) et cos (Δ). La mesure d'épaisseur est confirmée si la valeur de l'angle obtenue lors de l'ajustement est proche de 75° (75°+/-0,5°).

Le procédé est utilisable pour la mesure d'épaisseur d'autres couches, en particulier la couche de MgO, en remplaçant la valeur de a par celle correspondant au matériau et connue de l'homme du métier.

Pour les couches d'épaisseur plus importante, en particulier de MgF₂, on effectue, une mesure classique d'épaisseur à l'ellipsomètre Woolam VB-400 VASE (mesure à 3 angles d'incidence 65°, 70° et 75°).

L'ajustement est effectué en faisant varier les paramètres de Cauchy et l'épaisseur. On donne un point de départ pour le calcul a (dépendant du matériau), b=0,003 et c=0 et une valeur estimée de l'épaisseur (typiquement a=1,38 pour MgF₂).

### 1.3. Surcouche d'aide au débordage

La surcouche est constituée d'une couche de MgF₂ et d'une couche de MgO déposées par évaporation au moyen de la même machine que la couche antisalissure.

### a) Dépôt de la couche de MgF₂

Le matériau évaporé est un composé de formule MgF₂, de granulométrie 1-2,5 nm, commercialisé par la société MERCK. Pour le MgF₂, on a régulé la vitesse de dépôt autour de 0,75 nm/s.

### b) Dépôt de la couche de MgO

On procède au dépôt par évaporation de MgO directement sur la couche de MgF₂, à partir de pastilles de MgO (référence 0481263) de la société UMICORE, d'épaisseur égale à 2 nm.

### 2. Tests et essais

### 2.1. Mesure de l'angle de reculée

L'angle de reculée est défini dans la thèse de doctorat - Université Paris 7 - Denis Diderot, présentée par Nolwenn Le Grand - Piteira et soutenue à l'ESCPI le 21 juin 2006, en particulier Chapitre 1, pages 19-20, paragraphe 1.3.4 « Une loi insuffisante dans la réalité - Hystérésis du mouillage ».

Les mesures ont été effectuées à l'aide d'un goniomètre semi-automatique par acquisition et analyse d'images de chez KRUSS-DSA100 équipé de l'option table inclinable (PA3220). Les mesures sont réalisées au centre géométrique de la face convexe de verres sphériques avec un rayon de courbure > 100 mm.

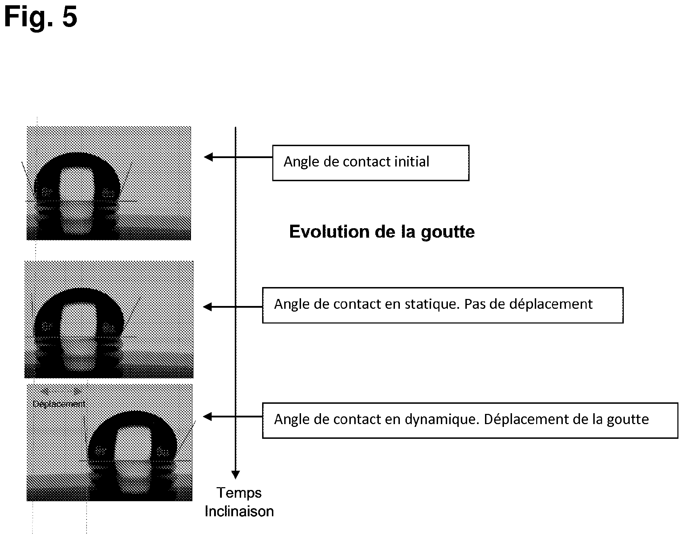

La mesure se déroule en trois étapes :
- application d'une goutte d'eau désionisée d'un volume de 25 µl au centre géométrique ;
- inclinaison automatique de la table à vitesse constante (3°/seconde) et acquisition continue de l'image de la goutte en mouvement ;
- analyse d'images issues de la séquence d'acquisition avec détermination de la vitesse de déplacement de la goutte et des angles de contact aux points triples à l'avant θa et à l'arrière de la goutte θr (voir la Figure 5).. Il s'agit de l'angle de contact formé entre la tangente à la goutte au pont triple (jonction liquide/eau/solide) et la tangente à la surface du verre au même point triple, la goutte étant examinée de profil. Par convention, l'angle est celui situé à l'intérieur de la goutte.

L'angle de reculée θr correspond à l'angle déterminé au point opposé au sens du mouvement de la goutte.

La valeur de l'angle de reculée considérée dans nos essais est la moyenne des valeurs d'angles pour lesquelles la vitesse de déplacement de la goutte est comprise entre 0,05 et 0,1 mm/seconde.

### 2.2. Essai de durabilité

Ce test consiste à caractériser la durabilité des couches antisalissures des articles d'optique par une évaluation des performances des articles d'optique après des cycles accélérés de vieillissement (sollicitations mécaniques) à l'aide de la mesure de l'angle de reculée.

### Description de l'essai

### 1. Retrait de la surcouche

Au temps tₒ, la surcouche d'aide au débordage est retirée et on mesure l'angle de reculée de la surface.

### 2. Séquence de vieillissement

Un tissu « microfibre M840S 30x40 » de FACOL est plongé dans l'eau à 25°C pendant 1 minute puis remis à l'air. Ce tissu microfibre est ensuite utilisé pour mécaniquement frotter la surface de l'article d'optique comportant le revêtement antisalissure (hydrophobe) 1200 fois (c'est-à-dire 600 cycles), 2400 fois (c'est-à-dire 1200 cycles), 3600 fois (c'est-à-dire 1800 cycles), 4800 fois (c'est-à-dire 2400 cycles) en un mouvement aller/retour (1 cycle correspondant à un mouvement aller et un mouvement retour) tout en appliquant une charge de 3,5 kg (dans l'air à 25°C, 40 à 60% d'humidité). L'angle de reculée est mesuré après 2400 cycles de frottement. L'équipement mécanique de frottement est réglé pour atteindre les 600 cycles en 7 minutes.

### 3. Mesure des angles de reculée (après essai de durabilité)

Dans les essais décrits, on a présenté les angles de reculée en comparant sa valeur avant et après vieillissement.

### 3. Expérimentations

### 3.1. Première série de verres (verres de lunettes)

On a fabriqué trois lots des verres comme indiqué ci-dessus en utilisant le matériau HDTC avec une épaisseur programmée de 17 nm.

Les verres du premier lot (lot n°1) ne comportent pas de surcouche d'aide au débordage. Les verres des deux autres lots (lots n°2 et n°3) ont été revêtus d'une surcouche à la suite du dépôt de la couche antisalissure.

On a mesuré avant et après test de durabilité, l'angle de reculée de la couche antisalissure après stockage dans les conditions ambiantes et enlèvement de la surcouche.

| N° de lot | Stockage avant dépôt de la surcouche | | Stockage avant enlèvement de la surcouche | |
|---|---|---|---|---|
| | Durée | Conditions | Durée | Conditions |
| 1 | Pas de surcouche | | Pas de surcouche | |
| 2 | Dépôt immédiat de la surcouche | | 1 semaine | ambiantes 25°C - 50% RH - P atm |
| 3 | Dépôt immédiat de la surcouche | | 1 mois | ambiantes 25°C - 50% RH - P atm |

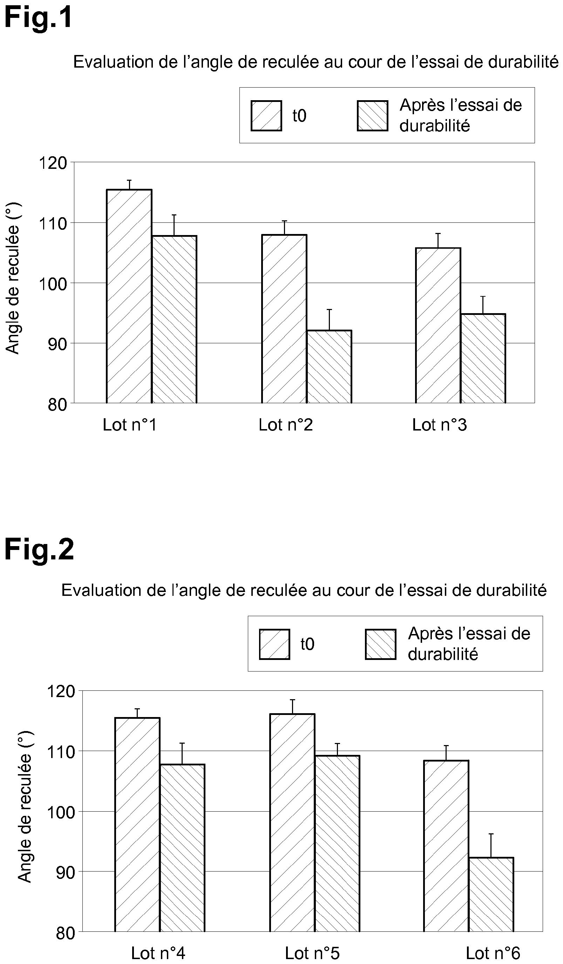

Les résultats (moyenne de la mesure sur 3 verres) sont donnés à la Figure 1.

On note une forte diminution de la valeur de l'angle de reculée, notamment après le test de durabilité, pour les verres des lots n°2 et n°3qui ont été revêtus d'une surcouche d'aide au débordage.

### 3.2. Deuxième série de verres

On a fabriqué trois lots de verres comme indiqué dans les procédures générales (HDTC, 17 nm).

Les verres du lot n°4 et du lot n°6 sont analogues à ceux des lots n°1 et n°3, respectivement de la première série.

Les verres du lot n°5 ont été réalisés selon le procédé de l'invention en stockant les verres pourvus de la couche antisalissure dans une atmosphère tropicale d'air (40°C et 80% RH) pendant une semaine avant de déposer la surcouche. Puis les verres revêtus ont été stockés quelques jours dans les conditions ambiantes avant enlèvement de la surcouche.

On a mesuré, avant et après test de durabilité, l'angle de reculée de la couche antisalissure après le stockage et l'enlèvement de la surcouche.

| N° de lot | Stockage avant dépôt de la surcouche | | Stockage avant enlèvement de la surcouche | |
|---|---|---|---|---|
| | Durée | Conditions | Durée | Conditions |
| 4 | Pas de surcouche | | Pas de surcouche | |
| 5 | 1 semaine | tropicales (40°C et 80% RH) | 1 semaine | ambiantes |
| 6 | dépôt immédiat de la surcouche | | 1 semaine | ambiantes |

| | | | | |
|---|---|---|---|---|
| Conditions ambiantes : 25°C - 50% RH - Pression atmosphérique Conditions tropicales : 40°C - 80% RH - Pression atmosphérique | | | | |

Les résultats (moyenne de la mesure sur trois verres) sont donnés à la Figure 2.

Les résultats montrent que les verres traités selon l'invention (lot n°5) ont des valeurs d'angle de reculée, notamment après un test de durabilité, au moins équivalentes à celles d'un verre n'ayant pas été revêtu avec une surcouche d'aide au débordage (lot n°4) et bien supérieures à celles des verres non traités selon l'invention (lot n°6), dont la surcouche temporaire d'aide au débordage est déposée immédiatement et sans traitement après le dépôt de la couche antisalissure.

### 3.3. Troisième série de verres

On a reproduit les essais de la deuxième série de verre mais en faisant varier les conditions et durées de stockage des verres avant et après dépôt de la surcouche d'aide au débordage. Le lot n°6 est rappelé en référence.

| N° de lot | Stockage avant dépôt de la surcouche | | Stockage avant enlèvement de la surcouche et mesure de l'angle de reculée | |
|---|---|---|---|---|
| | Durée | Conditions | Durée | Conditions |
| **6** | Dépôt immédiat de la surcouche | | 1 semaine | ambiantes |
| 7 | Pas de surcouche | | Pas de surcouche | |
| 8 | 2 jours | ambiantes | < 1 jour | ambiantes |
| 9 | 5 jours | ambiantes | 3 jours | ambiantes |
| 10 | 2 jours | tropicales | 3 jours | ambiantes |
| 11 | 2 jours | ambiantes | 2 mois | ambiantes |
| 12 | 7 jours | ambiantes | 2 mois | ambiantes |

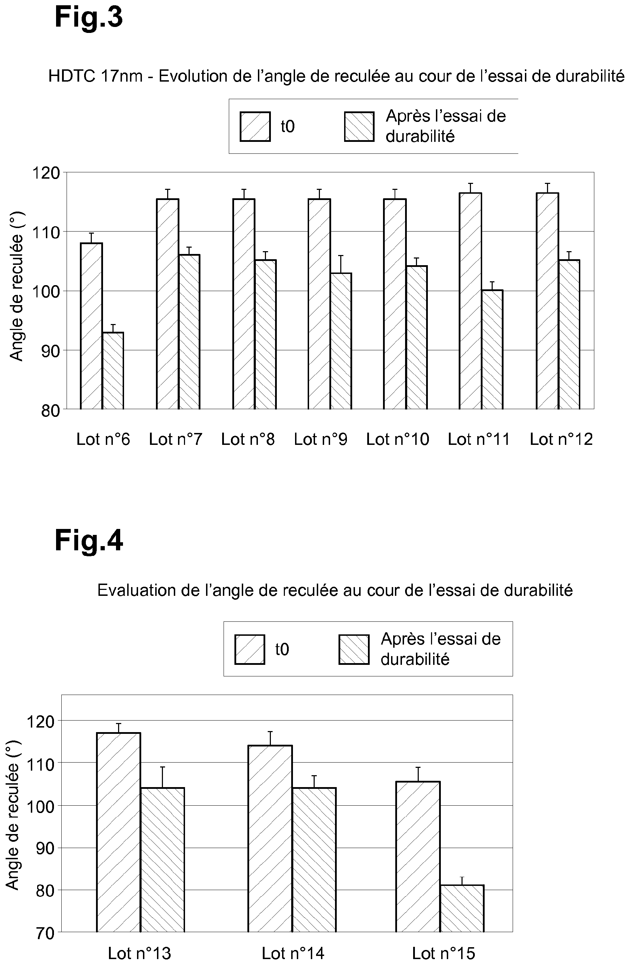

Les résultats sont matérialisés à la Figure 3.

Les résultats montrent que les verres traités selon l'invention (lots n°8 à 12) ont des valeurs d'angle de reculée initiales (to) équivalentes à celles d'un verre n'ayant pas été revêtu avec une surcouche d'aide au débordage (lot n°7) et des valeurs d'angle de reculée après un test de durabilité bien supérieures à celles des verres non traités selon l'invention (lot n°6), dont la surcouche temporaire d'aide au débordage est déposée immédiatement et sans traitement après le dépôt de la couche antisalissure.

### 3.4. Quatrième série de verres

On a fabriqué trois lots de verres (lots n°13, 14 et 15) comme indiqué dans les procédures générales avec une machine SYRUS 3 en utilisant de l'OPTOOL DSX® et une épaisseur programmée de 19 nm.

Les conditions sont les suivantes :

| N° de lot | Stockage avant dépôt de la surcouche | | Stockage avant enlèvement de la surcouche | |
|---|---|---|---|---|
| | Durée | Conditions | Durée | Conditions |
| 13 | 2 semaines | tropicales | 1 semaine | ambiantes |
| 14 | Pas de surcouche | | Pas de surcouche | |
| 15 | Dépôt immédiat de la surcouche | | 1 semaine | ambiantes |

Les résultats des mesures d'angle de reculée, avant et après un test de durabilité, sont donnés à la Figure 4.

Ces résultats montrent que le procédé de l'invention (lot n°13) permet à la couche antisalissure de conserver ses propriétés initiales (c'est-à-dire avant dépôt et enlèvement d'une surcouche d'aide au débordage (lot n°14), notamment la valeur de l'angle de reculée, l'angle de reculée des verres traités selon l'invention étant supérieur d'au moins 8° à celui du verre de contrôle (lot n°15).

### 3.5 Cinquième série de verres (Exemple avec libération d'eau dans la machine de dépôt sous vide).

L'appareil à vide utilisé pour le dépôt est une SATIS 1200 DLF.
Les verres sont préparés selon le mode opératoire décrit en 1.1 ci-dessus, excepté que le revêtement anti-reflet est un empilement constitué d'une sous-couche de silice, une fine couche de zircone ∼ 20nm (Z1), une fine couche de silice ∼ 20nm (Q1), une couche épaisse de zircone ∼ 70 nm (Z2), une très fine couche couche d'ITO (indium tin oxide), une couche épaisse de silice ∼ 80 nm (Q2), la couche antisalissure Optool DSX ∼ 6 nm (épaisseur effectivement obtenue), la surcouche MgF₂ (∼ 20 nm) + 1nm de MgO.

Dans l'exemple de référence (comparatif), le dégivrage du meissner est effectué après le dépôt de la couche MgO et au début de la remise à l'air (Référence).

L'exemple du lot n°16 (invention) a consisté par apport à la référence à réaliser le dégivrage du Meissner après le dépôt du DSX et avant le dépôt du MgF₂.

L'exemple (lot n°17) (invention) a consisté par rapport à l'exemple du lot n°16 à réaliser l'ensemble du procédé à chaud : 100° lus sur les chaufferettes de la machine, résistances métalliques situés au dessus du carrousel.

L'exemple du lot n° 17(invention) permet la vaporisation de l'eau située sur le meissner pour un amorçage de l'hydrolyse du DSX et greffage accéléré avant le dépôt du MgF₂. Cet exemple combine réaction d'hydrolyse à l'humidité et une augmentation de la température.

### Paramètres process.

### Essai de référence

Q2 : Pression avant dépôt 9.1^{E}-4 Pa
Optool DSX : Pression avant dépôt 6.9^{E}-4 Pa
MgF₂ : Pression avant dépôt 6.5^{E}-4 Pa
MgO : Pression avant dépôt 5.9^{E}-4 Pa

### Exemple lot n°16

Q2 : Pression avant dépôt 1^{E}-3 Pa
Optool DSX : Pression avant dépôt 7.9^{E}-4 Pa
Dégivrage Meissner + pompage avant étape suivante : Pression max atteinte 1.06^{E}0 Pa / durée 10 minutes
MgF₂ : Pression avant dépôt 2^{E}-3 Pa
MgO : Pression avant dépôt 1.7^{E}-3 Pa

### Exemple lot n°17

Chauffage à 100°
Q2 : Pression avant dépôt 8.5^{E}-3 Pa
Optool DSX : Pression avant dépôt 6^{E}-4 Pa
Dégivrage Meissner + pompage avant étape suivante : Pression max atteinte 1.25^{E}0 Pa / durée 13 minutes
MgF₂ : Pression avant dépôt 2^{E}-3 Pa
MgO : Pression avant dépôt 1.8^{E}-3 Pa

### Les résultats

Essai de référence (comparatif) : angle de reculée après l'essai de durabilité: inférieur à 90°
Lot n°16 (invention) : angle de reculée après l'essai de durabilité 95°
Lot n°17 (invention): angle de reculée après l'essai de durabilité 97,5°

## Revendications

1. Procédé de fabrication d'un article d'optique apte au débordage comprenant une couche antisalissure sur laquelle est déposée une surcouche temporaire d'aide au débordage, comprenant :
- le dépôt sur un substrat optique d'une couche antisalissure organique comprenant au moins un composé polymérique fluoré comportant des fonctions hydrolysables ; et
- le dépôt sur la couche antisalissure d'une surcouche d'aide au débordage, de nature minérale, comprenant un ou plusieurs fluorures métalliques et/ou un ou plusieurs oxydes ou hydroxydes métalliques ;
procédé **caractérisé en ce qu'**il comprend en outre, préalablement au dépôt de la surcouche d'aide au débordage, une étape de greffage accéléré de la couche antisalissure choisie parmi :
(a) un traitement dans une atmosphère humide de la couche antisalissure
(b) un traitement catalytique en phase vapeur acide ou basique de la couche antisalissure déposée.

2. Procédé de fabrication selon la revendication 1, **caractérisée en ce que** le traitement de greffage accéléré est un traitement en atmosphère humide qui s'effectue dans une atmosphère d'air à pression atmosphérique.

3. Procédé selon la revendication 1, **caractérisé en ce que** les dépôts de la couche antisalissure et de la surcouche d'aide au débordage sont effectués sous vide et l'étape de greffage accéléré de la couche antisalissure est un traitement dans une atmosphère humide de la couche antisalissure réalisé par une étape de remise en atmosphère d'air à pression atmosphérique entre le dépôt de la couche antisalissure et le dépôt de la surcouche d'aide au débordage.

4. Procédé selon la revendication 1, **caractérisé en ce que** les dépôts de la couche antisalissure et de la surcouche d'aide au débordage sont effectués sous vide dans une enceinte à vide et l'étape de greffage accéléré de la couche antisalissure est un traitement dans une atmosphère humide de la couche antisalissure, réalisé par libération d'eau dans l'enceinte à vide, sans étape de remise à pression atmosphérique entre le dépôt de de la couche antisalissure et le dépôt de la surcouche d'aide au débordage.

5. Procédé selon la revendication 4, **caractérisé en ce que** l'enceinte à vide comprend un piège cryogénique et la libération d'eau est effectuée par dégivrage dudit piège cryogénique.

6. Procédé de fabrication selon la revendication 2 ou 3, **caractérisé en ce que** le traitement en atmosphère d'air à pression atmosphérique est effectué dans un taux d'humidité relative (RH) de 45% à 95% et une température de 15° à 75°C.

7. Procédé selon l'une quelconque des revendications 2 à 3, **caractérisé en ce que** la durée du traitement en atmosphère d'air est de 1 à 7 jours, de préférence de 3 à 5 jours.

8. Procédé selon l'une quelconque des revendications 1 à 7 **caractérisé en ce que** les fonctions hydrolysables sont des fonctions alkoxysilanes.

9. Procédé selon l'une quelconque des revendications 1 à 8, **caractérisé en ce que** les fonctions hydrolysables sont présentes à une seule extrémité de la chaîne du composé polymérique fluoré.

10. Procédé selon la revendication 1, **caractérisé en ce que** la phase vapeur acide ou basique est un air saturé en HCI ou NH₃ avec sa phase liquide en solution aqueuse à pression atmosphérique et température ambiante (18-25°C).

11. Procédé selon la revendication 10, **caractérisé en ce que** la solution aqueuse acide est une solution aqueuse de HCI saturée à 37%.

12. Procédé selon l'une quelconque des revendications précédentes, **caractérisé en ce que** la surcouche temporaire est constituée d'un fluorure métallique, de préférence MgF₂.

## Patentansprüche

1. Verfahren zur Herstellung eines optischen Artikels, der für eine Randbearbeitung geeignet ist, umfassend eine fäulnisverhindernde Schicht, auf der eine temporäre Überzugsschicht zur Unterstützung der Randbearbeitung abgeschieden wird, umfassend:
- die Abscheidung, auf einem optischen Substrat, einer organischen fäulnisverhindernden Schicht, umfassend mindestens eine fluorierte Polymerverbindung, umfassend hydrolysierbare Funktionen; und
- die Abscheidung, auf der fäulnisverhindernden Schicht, einer Überzugsschicht zur Unterstützung der Randbearbeitung, von mineralischer Beschaffenheit, umfassend ein oder mehrere Metallfluoride und/oder ein oder mehrere Metalloxide oder -hydroxide;
wobei das Verfahren **dadurch gekennzeichnet ist, dass** es ferner, vor der Abscheidung der Überzugsschicht zur Unterstützung der Randbearbeitung, einen Schritt der beschleunigten Pfropfung der fäulnisverhindernden Schicht umfasst, ausgewählt aus:
(a) einer Behandlung der fäulnisverhindernden Schicht in einer feuchten Atmosphäre,
(b) einer katalytischen Behandlung der abgeschiedenen fäulnisverhindernden Schicht in saurer oder basischer Dampfphase.

2. Herstellungsverfahren nach Anspruch 1,
**dadurch gekennzeichnet, dass** die Behandlung der beschleunigten Pfropfung eine Behandlung in feuchter Atmosphäre ist, die in einer Luftatmosphäre bei Atmosphärendruck bewirkt wird.

3. Verfahren nach Anspruch 1,
**dadurch gekennzeichnet, dass** die Abscheidungen der fäulnisverhindernden Schicht und der Überzugsschicht zur Unterstützung der Randbearbeitung im Vakuum bewirkt werden, und der Schritt der beschleunigten Pfropfung der fäulnisverhindernden Schicht eine Behandlung der fäulnisverhindernden Schicht in einer feuchten Atmosphäre ist, die durch einen Schritt des erneuten Aussetzens, an eine Luftatmosphäre bei Atmosphärendruck, zwischen der Abscheidung der fäulnisverhindernden Schicht und der Abscheidung der Überzugsschicht zur Unterstützung der Randbearbeitung durchgeführt wird.,

4. Verfahren nach Anspruch 1,
**dadurch gekennzeichnet, dass** die Abscheidungen der fäulnisverhindernden Schicht und der Überzugsschicht zur Unterstützung der Randbearbeitung im Vakuum in einer Hülle unter Vakuum bewirkt werden, und der Schritt der beschleunigten Pfropfung der fäulnisverhindernden Schicht eine Behandlung der fäulnisverhindernden Schicht in einer feuchten Atmosphäre ist, die durch Freisetzung von Wasser in der Hülle unter Vakuum durchgeführt wird, ohne einen Schritt des erneuten Aussetzens, an Atmosphärendruck, zwischen der Abscheidung der fäulnisverhindernden Schicht und der Abscheidung der Überzugsschicht zur Unterstützung der Randbearbeitung.

5. Verfahren nach Anspruch 4,
**dadurch gekennzeichnet, dass** die Hülle unter Vakuum eine Kühlfalle umfasst, und die Freisetzung von Wasser durch Enteisung der Kühlfalle bewirkt wird.

6. Herstellungsverfahren nach Anspruch 2 oder 3,
**dadurch gekennzeichnet, dass** die Behandlung in einer Luftatmosphäre bei Atmosphärendruck bei einem relativen Feuchtigkeitsgehalt (RH) von 45 % bis 95 % und einer Temperatur von 15° bis 75°C bewirkt wird.

7. Verfahren nach einem der Ansprüche 2 bis 3,
**dadurch gekennzeichnet, dass** die Dauer der Behandlung in einer Luftatmosphäre 1 bis 7 Tage, vorzugsweise 3 bis 5 Tage, beträgt.

8. Verfahren nach einem der Ansprüche 1 bis 7,
**dadurch gekennzeichnet, dass** die hydrolysierbaren Funktionen Alkoxysilan-Funktionen sind.

9. Verfahren nach einem der Ansprüche 1 bis 8,
**dadurch gekennzeichnet, dass** die hydrolysierbaren Funktionen an einem einzigen Ende der Kette der fluorierten Polymerverbindung vorhanden sind.

10. Verfahren nach Anspruch 1,
**dadurch gekennzeichnet, dass** die saure oder basische Dampfphase mit HCl oder NH₃ gesättigte Luft ist, mit ihrer Flüssigphase in wässriger Lösung bei Atmosphärendruck und Umgebungstemperatur (18-25°C).

11. Verfahren nach Anspruch 10,
**dadurch gekennzeichnet, dass** die saure wässrige Lösung eine wässrige HCl-Lösung, gesättigt mit 37 %, ist.

12. Verfahren nach einem der vorhergehenden Ansprüche,
**dadurch gekennzeichnet, dass** die temporäre Überzugsschicht aus einem Metallfluorid, vorzugsweise MgF₂, besteht.

## Claims

1. A process for manufacturing an optical article fit for edging, comprising an antifouling layer on which is deposited a temporary top coat that facilitates edging, comprising:
(a) the deposition, on an optical substrate, of an organic antifouling layer comprising at least one fluoropolymer compound comprising hydrolysable functions; and
(b) the deposition, on the antifouling layer, of a top coat that facilitates edging, of mineral nature, comprising one or more metal fluorides and/or one or more metal oxides or hydroxides;
process **characterized in that** it additionally comprises, prior to the deposition of the top coat that facilitates edging, a step of accelerated grafting of the antifouling layer selected from:
(a) a treatment in a wet atmosphere of the antifouling layer;
(b) a catalytic treatment in acidic or basic vapor phase of the deposited antifouling layer.

2. The manufacturing process as claimed in claim 1, **characterized in that** the accelerated grafting treatment is a treatment in a wet atmosphere that is carried out in an air atmosphere at atmospheric pressure.

3. The process as claimed in claim 1, **characterized in that** the depositions of the antifouling layer and of the top coat that facilitates edging are carried out under vacuum and the step of accelerated grafting of the antifouling layer is a treatment in a wet atmosphere of the antifouling layer carried out by a step of returning to an air atmosphere at atmospheric pressure between the deposition of the antifouling layer and the deposition of the top coat that facilitates edging.

4. The process as claimed in claim 1, **characterized in that** the depositions of the antifouling layer and of the top coat that facilitates edging are carried out under vacuum in a vacuum chamber and the step of accelerated grafting of the antifouling layer is a treatment in a wet atmosphere of the antifouling layer carried out by release of water into the vacuum chamber, without a step of returning to atmospheric pressure between the deposition of the antifouling layer and the deposition of the top coat that facilitates edging.

5. The process as claimed in claim 4, **characterized in that** the vacuum chamber comprises a cryogenic trap and the release of water is carried out by deicing said cryogenic trap.

6. The manufacturing process as claimed in claim 2 or 3, **characterized in that** the treatment in an air atmosphere at atmospheric pressure is carried out in a degree of relative humidity (RH) of from 45% to 95% and a temperature of from 15°C to 75°C.

7. The process as claimed in either one of claims 2 to 3, **characterized in that** the duration of the air atmosphere treatment is from 1 to 7 days, preferably from 3 to 5 days.

8. The process as claimed in any one of claims 1 to 7, **characterized in that** the hydrolysable functions are alkoxysilane functions.

9. The process as claimed in any one of claims 1 to 8, **characterized in that** the hydrolysable functions are present at only one end of the chain of the fluoropolymer compound.

10. The process as claimed in claim 1, **characterized in that** the acid or basic vapor phase is air saturated with HCl or NH₃ with its liquid phase in aqueous solution at atmospheric pressure and at ambient temperature (18-25°C).

11. The process as claimed in claim 10, **characterized in that** the acidic aqueous solution is a 37% saturated HCI aqueous solution.

12. The process as claimed in any one of the preceding claims, **characterized in that** the temporary top coat consists of a metal fluoride, preferably MgF₂.
